Europäisches Patentamt

European Patent Office

Office européen des brevets

(19)

(11) Veröffentlichungsnummer: **0 304 903 B1**

# (12) EUROPÄISCHE PATENTSCHRIFT

(45) Veröffentlichungstag der Patentschrift: **30.10.91**

(51) Int. Cl.5: **A01D 34/74**

(21) Anmeldenummer: **88113821.8**

(22) Anmeldetag: **25.08.88**

(54) **Höhenverstellbarer Handrasenmäher.**

(30) Priorität: **28.08.87 US 90648**

(43) Veröffentlichungstag der Anmeldung:
**01.03.89 Patentblatt 89/09**

(45) Bekanntmachung des Hinweises auf die
Patenterteilung:
**30.10.91 Patentblatt 91/44**

(84) Benannte Vertragsstaaten:
**DE FR GB SE**

(56) Entgegenhaltungen:
**FR-A- 2 028 438**
**GB-A- 2 054 333**
**US-A- 4 313 295**
**US-A- 4 558 558**

(73) Patentinhaber: **DEERE & COMPANY**
**1 John Deere Road**
**Moline, Illinois 61265(US)**

(72) Erfinder: **Bowditch, Hoel L.**
**2 Water Street**
**Foxboro Massachusetts 02035(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen höhenverstellbaren Handrasenmäher mit einem Gehäuse, an dem eine vordere und eine hintere Achse angeordnet ist.

Unter Handrasenmähern werden in der Regel nicht angetriebene Rasenmäher verstanden, die von einer Bedienungsperson geschoben werden. Solche Handrasenmäher sind meistens mit zwei vorderen und zwei rückwärtigen unverschwenkbar gelagerten Laufrädern ausgerüstet (US-A-4 224 785).

Andererseits ist es aber auch nicht mehr neu, Handrasenmäher mit Pendelrädern auszurüsten, wobei darunter Räder verstanden werden, die frei um eine zur Radachse senkrecht stehende Achse pendeln können (US-A-2 308 076).

Beide Systeme haben für die gewünschte Einsatzart Vor- und Nachteile.

Die mit der Erfindung zu lösende Aufgabe wird darin gesehen, höhenverstellbare Handrasenmäher sowohl für den Einsatz mit unverschwenkbaren Laufrädern als auch für den Einsatz mit Pendelrädern auszubilden. Diese Aufgabe ist nach der Erfindung dadurch gelöst worden, daß, wenn an der hinteren Achse zwei unverschwenkbare Laufräder angeordnet sind, die vordere Achse derart ausgebildet ist, daß unverschwenkbare Laufräder anbringbar sind, und der Handrasenmäher mit je einem an den beiden Seiten des Handrasenmähers angeordneten, eine die vordere Achse aufnehmende Öffnung und einen Verbindungsteil aufweisenden Pendelradsatz ausgerüstet ist, die über die Verbindungsteile mit dem Handrasenmäher verbunden sind.

Alternativ sieht die Erfindung vor, daß, wenn an der vorderen Achse zwei unverschwenkbare Laufräder angebracht sind, die hintere Achse derart ausgebildet ist, daß unverschwenkbare Laufräder anbringbar sind, und der Handrasenmäher mit je einem an den beiden Seiten des Handrasenmähers angeordneten, eine die hintere Achse aufnehmende Öffnung und einen Verbindungsteil aufweisenden Pendelradsatz ausgerüstet ist, die über die Verbindungsteile mit dem Handrasenmäher verbunden sind.

Eine derartige Pendelradsatzausbildung stellt sicher, daß bei einer Höhenverstellung sowohl der vorderen als auch der rückwärtigen Laufräder die Vertikalachse des Pendelrades immer im wesentlichen senkrecht zur Bodenoberfläche verbleibt, so daß die Pendelräder sich nicht verkanten und ihre Funktionsfähigkeit nicht verlieren. Selbstverständlich kann ein derart umgerüsteter Handrasenmäher wieder zurückgerüstet werden zu einem Mäher mit unverschwenkbaren Laufrädern.

Für einen Handrasenmäher, bei dem an der hinteren Achse zwei unverschwenkbare Laufräder angeordnet sind, wird vorgeschlagen, daß die Pendelradsätze über die Verbindungsteile mit der hinteren Achse verbunden sind.

Sind die unverschwenkbaren Laufräder dagegen an der vorderen Achse angeordnet, so können die Pendelradsätze über die Verbindungsteile mit der vorderen Achse verbunden sein.

Zweckmäßig kann eine Haltestange zwischen zwei Pendelradsätzen vorgesehen werden, um dem Handrasenmäher die erforderliche Stabilität zu geben.

Im einzelnen kann nach der Erfindung jeder Pendelradsatz einen zumindest teilweise gestreckten Rahmenteil aufweisen, der eine frei um eine vertikale Achse drehbare Halterung für ein Pendelrad aufnimmt. Vorteilhaft ist hierbei jeder Rahmenteil nach der Erfindung mit der eine Achse aufnehmenden Öffnung versehen, wobei an seinem dem Pendelrad abgelegenen Ende der Verbindungsteil angreift. Außerdem kann jeder Rahmenteil eine Öffnung zur Aufnahme der Haltestange aufweisen. Um eine einfache Verbindung mit dem Gehäuse zu erreichen, wird nach der Erfindung ferner vorgeschlagen, daß jeder Verbindungsteil an seinem dem Rahmenteil abgelegenen Ende mit einem einenends offenen, U-förmigen Schlitz zur Aufnahme einer Radachse versehen ist, wobei die den Schlitz aufnehmende Radachse mit einer Nut versehen sein kann, so daß ein sicherer Halt des Rahmenteils auf der Radachse gewährleistet ist.

Um nun einen Rasenmäher mit unverschwenkbaren Laufrädern leicht umbauen zu können, ist es lediglich erforderlich, wenigstens eines der am Gehäuse unverschwenkbar gelagerten Laufräder zu entfernen, wonach mindestens ein Pendelradsatz an das Gehäuse angeschlossen wird und die Achse, von der das unverschwenkbar gelagerte Laufrad entfernt wurde, in die Öffnung am Pendelradsatz eingeführt wird, wonach sie gegebenenfalls noch zu sichern wäre.

Für einen Rasenmäher mit zwei rückwärtigen und zwei frontseitigen unverschwenkbar gelagerten Laufrädern werden zur Durchführung des Umbauverfahrens folgende Schritte vorgeschlagen. Zunächst werden die frontseitig oder rückwärtig am Gehäuse vorgesehenen Laufräder entfernt, wobei die übrigen beiden unverschwenkbar gelagerten Laufräder am Gehäuse verbleiben. Danach wird ein Pendelradsatz an die eine Seite des Gehäuses und nachfolgend ein zweiter Pendelradsatz an die andere Seite des Gehäuses angeschlossen. Anschließend wird die Achse, von der die unverschwenkbaren Laufräder entfernt wurden, in die Öffnungen an den beiden Pendelradsätzen eingeführt. Erforderlichenfalls kann dann noch eine Verbindung der beiden Pendelradsätze über die Haltestange erfolgen. Dieses ganze Verfahren kann sich in kürzester Zeit durchführen lassen, wobei ein besonders schneller Anschluß der Pendelradsätze an dem Gehäuse erreicht werden kann, wenn die rückwärtigen Enden der mit den Pendelradsätzen verbundenen Verbindungsteile lediglich auf die Achse mit den unverschwenkbar gelagerten Laufrädern aufgeschoben werden.

Ein besonders sicherer Sitz wird dann erreicht, wenn vorab in die Achse mit den unverschwenkbar gelagerten Laufrädern beidenends je eine Nut eingedreht wurde.

In der Zeichnung ist ein nachfolgend näher erläutertes Ausführungsbeispiel der Erfindung dargestellt. Es zeigt:

Fig. 1    einen Handrasenmäher mit vier unverschwenkbar gelagerten Rädern,

Fig. 2    einen Handrasenmäher mit zwei unverschwenkbar gelagerten rückwärtigen Laufrädern und zwei vorderen verschwenkbar gelagerten Rädern teilweise in auseinandergezogener Darstellung,

Fig. 3    einen umgerüsteten Handrasenmäher mit parallel verstelltem Gehäuse,

Fig. 4    eine ähnliche Darstellung wie in Fig. 3, wobei sich jedoch der Stellmechanismus an der Vorderseite des Gehäuses in einer Position befindet, daß die Vorderkante des Gehäuses am weitesten nach unten abgesenkt ist, und

Fig. 5    einen Schnitt entlang der Linie 5 - 5 gemäß Fig. 4.

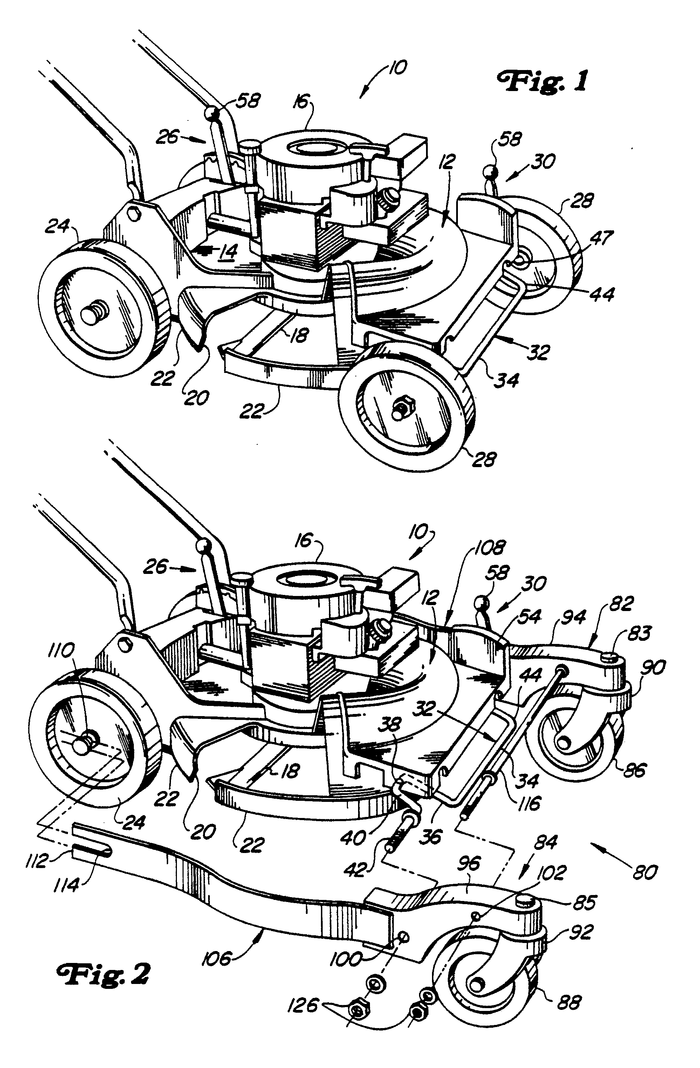

In Fig. 1 ist ein repräsentativer Handrasenmäher 10 mit unverschwenkbaren Laufrädern 24 und 28 dargestellt, der ein Gehäuse 12 für ein umlaufendes Messer und einen Oberteil 14 aufweist, auf dem ein Motor 16 mit einer vertikalen Welle angeordnet ist, die das Mähmesser 18 aufnimmt. Das herkömmliche Gehäuse 12 weist einen Schurz 20 auf, der die Bewegungsbahn des Mähmessers 18 abdeckt und der mit einer unteren Kante 22 versehen ist, die unterhalb der Bewegungsbahn des Messers liegt. Das Gehäuse 12 selbst ist, wie aus Fig. 1 hervorgeht, auf zwei rückwärtigen unverschwenkbar gelagerten Laufrädern 24 angeordnet, die über eine Einstellvorrichtung 26 verstellt werden können, sowie auf zwei vorderen unverschwenkbar angeordneten Laufrädern 28, die über eine Einstellvorrichtung 30 höhenverstellt werden können. Beide Einstellvorrichtungen sind herkömmlicher Art, und eine ins einzelne gehende Beschreibung scheint nicht erforderlich zu sein.

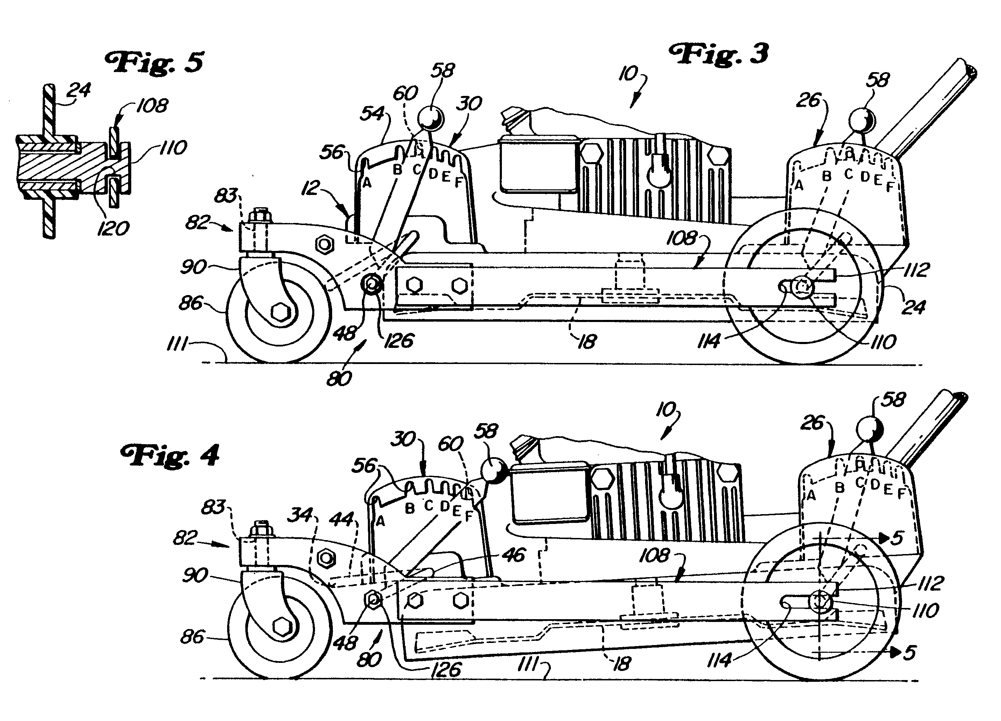

Wie aus den Figuren 1 und 2 hervorgeht, ist zum Befestigen der unverschwenkbaren vorderen Laufräder 28 und für die Vertikalverstellung eine stangenförmige Achse 32 mit einem mittigen U-förmigen Teil 34, der einen rechten Schenkel 36 aufweist, der mit dem anderen Ende eines quer verlaufenden Befestigungsteils verbunden ist, der sich wiederum an das äußere Ende eines Kurbelteils 40 anschließt, vorgesehen. Der Kurbelteil 40 hat einen nach außen gebogenen Endteil 42, auf dem das rechte vordere Laufrad drehbar gelagert ist. In ähnlicher Weise weist der U-Teil 34 einen linken Schenkel 44 auf, der mit dem hinteren Ende eines quer verlaufenden Befestigungsteils 46 verbunden ist, dessen äußeres Ende wiederum mit einem Kurbelteil 47 in Verbindung steht. Auch der Kurbelteil 47 hat einen nach Außen gebogenen Endteil 48 (Fig. 3 und 4), an dem das linke vordere Laufrad drehbar angeordnet ist. Die Befestigungsteile 38 und 46 der Achse 32 sind axial zueinander ausgerichtet und über in der Zeichnung nicht dargestellte rechte und linke Laschen mit dem Gehäuse schwenkbar verbunden.

Wie am besten aus den Figuren 3 und 4 zu ersehen ist, weist die Einstellvorrichtung 30 einen vertikalen, segmentartig ausgebildeten Ansatz 54, der zu der linken Frontseite des Gehäuses 12 gehört, und eine Vielzahl von zueinander Abstand aufweisenden Rasternuten 56 auf, die bogenförmig angeordnet sind an der äußeren Oberfläche. An die Achse 32 greift in dem Bereich, in dem sich der Befestigungsteil 46 und der Kurbelteil 47 treffen, ein Hebel 58 an, der vorzugsweise federnd ausgebildet ist und einen Zapfen 60 aufnimmt, der in eine der Rasternuten 56 eingreifen kann und damit die Achse 32 in verschiedenen Winkelpositionen feststellen kann. Auf diese Weise können die Laufräder 28 in verschiedenen Vertikalpositionen mit Bezug auf das Gehäuse eingestellt werden. Eine derartige Verstellung der vorderen Laufräder 28 wird natürlich nicht ohne eine Verstellung der rückwärtigen Laufräder durchgeführt, damit die Schnitthöhe des Mähmessers 18 richtig eingestellt werden kann. Im einzelnen wird das Mähmesser 18 seine höchste Schnitthöhe einnehmen, wenn der Hebel 58 die mit A gekennzeichnete Position einnimmt. Die Schnitthöhe des Mähmessers nimmt ab, wenn der Hebel im Uhrzeigerdrehsinn in eine andere Endstellung, die mit F bezeichnet ist, verschwenkt wird. Der U-Teil 34 der Achse 32 dient zusätzlich als Sicherheitsbügel, der verhindert, daß ein Fuß der Bedienungsperson zu nah an das vordere Ende des Gehäuses und damit eventuell in Kontakt mit dem Mähmesser kommt. Einzelheiten einer solchen Konstruktion sind in dem Dokument US-A-4 224 785 ersichtlich.

Beim vorliegenden Ausführungsbeispiel ist die Erfindung an einem Handrasenmäher dargestellt, der die vorstehend beschriebene Frontachse aufweist. Selbstverständlich kann die Erfindung auch an anderen Handrasenmähern angewendet werden, wobei eine Höhenverstellung nicht unbedingt sein muß und es auch durchaus denkbar ist, daß sich der Rasenmäher nur auf drei Laufrädern, beispielsweise einem vorderen und zwei rückwärtigen, abstützt.

Die Manövrierfähigkeit eines derartigen Handrasenmähers, der vier unverschwenkbare Laufräder aufweist, ist natürlich nicht groß, und über die erfindungsgemäße Umrüstung wird eine bessere Manövrierfähigkeit erreicht, so daß Kurven von 180° leicht durchfahren werden können, ohne daß die Bedienungsperson beide Hände benötigt und wobei darüber hinaus die Grasnarbe nicht durch die unverschwenkbaren Räder verletzt wird. Die erfindungsgemäße Umrüstung ermöglicht es ferner, daß die Schnitthöhe nicht verändert wird und daß darüber hinaus eine Höhenverstellung, sofern sie an dem Handrasenmäher vorgesehen ist, nach wie vor durchgeführt werden kann. Im einzelnen sieht die Erfindung hierzu einen Umbausatz 80 vor, durch den die beiden vorderen unverschwenkbar gelagerten Laufräder 28 ersetzt werden. Der Umbausatz 80 besteht im einzelnen aus zwei Pendelradsätzen 82 und 84 mit Pendelrädern 86 und 88, die in Halterungen 90 und 92 gelagert sind, die wiederum in Rahmenteilen 94 und 96 um vertikale Achsen schwenkbar sind. Jeder Rahmenteil 94, 96 ist mit einer Öffnung 100 versehen, in der später noch zu beschreibende Komponenten aufgenommen werden können.

Jeder Pendelradsatz 82 und 84 ist mit Verbindungsteilen 106 und 108, die sich im wesentlichen in Längsrichtung erstrecken, versehen, wobei sich diese Verbindungsteile 106 und 108 in etwa über die gesamte Länge des Handrasenmähers 10 zwischen den Rahmenteilen 94 und 96, mit denen sie verbunden sind, und den entsprechenden Enden einer hinteren Achse 110 erstrecken. An den Enden 112 der Verbindungsteile 106 und 108 sind offene, U-förmig ausgebildete Schlitze 114 vorgesehen. Jeder Verbindungsteil 106 und 108 ist so ausgebildet, daß er der Kontur des Gehäuses 12 folgen kann.

Bekanntlich ist es zur Funktion eines Pendelrades wichtig, daß seine vertikale Welle senkrecht zu einer Auflagefläche oder der Bodenoberfläche 111 verläuft, und im Falle der Verwendung von Pendelrädern 86 und 88 an einem Handrasenmäher 10 ist es wichtig, daß im eingebauten Zustand die vertikalen Achsen 83 und 85 der Pendelräder immer senkrecht zur Bodenoberfläche 111 verbleiben. Um das zu erreichen, ist es wichtig, daß die Mitte oder die Achse eines jeden Laufrades 24 oder der Pendelräder 86 und 88 den gleichen Abstand von der Bodenoberfläche 111 aufweist, so daß in jeder Höhenstellung das Mähmesser 18 parallele Mähkreise mit Bezug auf die Bodenoberfläche 111 beschreibt. Durch die Verbindung der vorderen und rückwärtigen Achse über die Verbindungsteile 106 und 108 verbleiben die vertikalen Achsen 83 und 85 der beiden Pendelräder 86 und 88 immer senkrecht zu der Bodenoberfläche 111, wenn immer die Schnitthöhe geändert wird und die beiden vorderen und rückwärtigen Laufräder mit Bezug auf das Gehäuse verstellt werden.

Falls erforderlich, kann noch eine Haltestange 116 zur Verbindung zwischen den beiden Pendelradsätzen 82 und 84 vorgesehen werden, wodurch der Umbausatz im Einbau seine erforderliche Stabilität erhält und außerdem ein konstanter Abstand zwischen den Rahmenteilen 94 und 96 eingehalten wird.

Zur Vorbereitung eines herkömmlichen Handrasenmähers 10 zur Aufnahme des Umbausatzes 80 kann es noch wünschenswert sein, Nuten 120 in den beiden Enden der rückwärtigen Achse vorzusehen.

Das Verfahren zur Umrüstung eines herkömmlichen Handrasenmähers 10 mit unverschwenkbaren vorderen Laufrädern 28 in einen mit Pendelrädern nach der Erfindung erfordert in der Regel nur wenige Minuten, beispielsweise zwei. Um die Umrüstung durchzuführen, wird die rückwärtige Achse 110 etwas modifiziert, um die U-förmigen Schlitze 114 der Verbindungsteile 106 und 108 aufnehmen zu können. Dies kann in einfacher Weise dadurch gemacht werden, daß man den Durchmesser der Enden der rückwärtigen Achse reduziert, so daß sie in etwa der Höhe des Schlitzes 114 entsprechen. Andererseits ist es durchaus zweckmäßig, entsprechende Nuten 120 vorzusehen. Ist ein Handrasenmäher so modifiziert worden, dann können die linken und rechten vorderen Laufräder 28 entfernt werden, wonach die beiden Verbindungsteile 106 und 108 mit der rückwärtigen Achse durch Einführen des Schlitzes 114 über die Nut 120 verbunden werden. Danach werden die Rahmenteile 94 und 96 mit der vorderen Achse 32 durch Einführen der Endstücke 42 und 48 in die Öffnungen 100 verbunden. Selbstverständlich wird zunächst nur der Rahmenteil an einer Seite mit den entsprechenden Gegenteilen verbunden und nachfolgend der Rahmenteil an der anderen Seite. Wird die Haltestange 116 noch für erforderlich gehalten, so muß sie ebenfalls eingesetzt werden. Eine Sicherung der Haltestange als auch der Endteile der vorderen Achse 32 erfolgt über entsprechende Muttern 126. Zur Aufnahme der Haltestange 116 in den Rahmenteilen 94 und 96 sind entsprechende Öffnungen 102 vorgesehen.

Im ganzen gesehen wird hiermit ein äußerst einfacher Vorschlag zur Umrüstung eines Handrasenmähers mit unverschwenkbaren Laufrädern in einen solchen mit verschwenkbaren Laufrädern gemacht, wobei selbstverständlich ein derart umgerüsteter Handrasenmäher auch wieder schnell zurückgerüstet werden kann. Hierbei verlaufen dann die einzelnen Verfahrensschritte umgekehrt.

**Patentansprüche**

1. Höhenverstellbarer Handrasenmäher (10) mit einem Gehäuse (12), an dem eine vordere Achse (32) und eine hintere Achse (110) angeordnet ist, wobei an der hinteren Achse (110) zwei unverschwenkbare Laufräder (24) angebracht sind und die vordere Achse (32) derart ausgebildet ist, daß unverschwenkbare Laufräder (28) anbringbar sind, und mit je einem an den beiden Seiten des Handrasenmähers (10) angeordneten, eine die vordere Achse (32) aufnehmende Öffnung (100) und einen Verbindungsteil (106, 108) aufweisenden Pendelradsatz (82, 84), die über die Verbindungsteile (106, 108) mit dem Handrasenmäher (10) verbunden sind.

2. Höhenverstellbarer Handrasenmäher (10) mit einem Gehäuse (12), an dem eine vordere Achse (32) und eine hintere Achse (110) angeordnet ist, wobei an der vorderen Achse (32) zwei unverschwenkbare Laufräder (28) angebracht sind und die hintere Achse (110) derart ausgebildet ist, daß unverschwenkbare Laufräder (24) anbringbar sind, und mit je einem an den beiden Seiten des Handrasenmähers (10) angeordneten, eine die hintere Achse (110) aufnehmende Öffnung (100) und einen Verbindungsteil (106, 108) aufweisenden Pendelradsatz (82, 84), die über die Verbindungsteile (106, 108) mit dem Handrasenmäher (10) verbunden sind.

3. Handrasenmäher nach Anspruch 1, dadurch gekennzeichnet, daß die Pendelradsätze (82, 84) über die Verbindungsteile (106, 108) mit der hinteren Achse (110) verbunden sind.

4. Handrasenmäher nach Anspruch 2, dadurch gekennzeichnet, daß die Pendelradsätze (82, 84) über die Verbindungsteile (106, 108) mit der vorderen Achse (32) verbunden sind.

5. Handrasenmäher nach Anspruch 1 oder 2, dadurch gekennzeichnet, daß eine Haltestange (116) zwischen zwei Pendelradsätzen (82, 84) vorgesehen ist.

6. Handrasenmäher nach einem oder mehreren der vorherigen Ansprüche, dadurch gekennzeichnet, daß jeder Pendelradsatz (82, 84) einen zumindest teilweise gestreckten Rahmenteil (94, 96) aufweist, der eine frei um eine vertikale Achse drehbare Halterung (90, 92) für ein Pendelrad (86, 88) aufnimmt.

7. Handrasenmäher nach Anspruch 6, dadurch gekennzeichnet, daß jeder Rahmenteil (94, 96) mit der eine Achse (32, 110) aufnehmenden Öffnung (100) versehen ist und an seinem dem Pendelrad (86, 88) abgelegenen Ende mit dem Verbindungsteil (106, 108) verbunden ist.

8. Handrasenmäher nach Anspruch 5 und 6, dadurch gekennzeichnet, daß jeder Rahmenteil (94, 96) eine Öffnung (102) zur Aufnahme der Haltestange (116) aufweist.

9. Handrasenmäher nach einem oder mehreren der vorherigen Ansprüche, dadurch gekennzeichnet, daß jeder Verbindungsteil (106, 108) an seinem dem Rahmenteil (94, 96) abgelegenen Ende (112) mit einem einenends offenen, U-förmigen Schlitz (114) zur Aufnahme einer Radachse (110) versehen ist.

10. Handrasenmäher nach Anspruch 9, dadurch gekennzeichnet, daß die den Schlitz (114) aufnehmende Radachse (110) mit einer Nut (115) versehen ist.

11. Verfahren zum Umbau eines höhenverstellbaren Handrasenmähers (10) mit einem Gehäuse (12), an dem eine vordere Achse (32) und eine hintere Achse (110) angeordnet ist, wobei an der vorderen (32) und hinteren Achse (110) zwei unverschwenkbare Laufräder (24, 28) angebracht sind, gekennzeichnet durch folgende Verfahrensschritte:

    (1) Entfernen der vorderen Laufräder (28),
    (2) Anschließen eines Pendelradsatzes (82 bzw. 84), der eine die vordere Achse (32) aufnehmende Öffnung (100) und einen Verbindungsteil (108 bzw. 106) aufweist, an eine Seite des Handrasenmähers (10), wobei der Pendelradsatz (82 bzw. 84) über den Verbindungsteil (108 bzw. 106) mit dem Handrasenmäher (10) und mittels der Öffnung (100) mit der vorderen Achse (32) verbunden wird,
    (3) Anschließen eines zweiten Pendelradsatzes (84 bzw. 82), der eine die vordere Achse (32) aufnehmende Öffnung (100) und einen Verbindungsteil (106 bzw. 108) aufweist, an die andere Seite des Handrasenmähers (10), wobei der zweite Pendelradsatz (84 bzw. 82) über den Verbindungsteil (106 bzw. 108) mit dem Handrasenmäher (10) und mittels der Öffnung (100) mit der vorderen Achse (32) verbunden wird.

12. Verfahren zum Umbau eines höhenverstellbaren Handrasenmähers (10) mit einem Gehäuse (12), an dem eine vordere Achse (32) und eine hintere Achse (110) angeordnet ist, wobei an der vorderen (32) und hinteren Achse (110) zwei unverschwenkbare Laufräder (24, 28) angebracht sind, gekennzeichnet durch folgende Verfahrensschritte:

(1) Entfernen der hinteren Laufräder (24),

(2) Anschließen eines Pendelradsatzes (82 bzw. 84), der eine die hintere Achse (110) aufnehmende Öffnung (100) und einen Verbindungsteil (108 bzw. 106) aufweist, an eine Seite des Handrasenmähers (10), wobei der Pendelradsatz (82 bzw. 84) über den Verbindungsteil (108 bzw. 106) mit dem Handrasenmäher (10) und mittels der Öffnung (100) mit der hinteren Achse (110) verbunden wird,

(3) Anschließen eines zweiten Pendelradsatzes (84 bzw. 82), der eine die hintere Achse (110) aufnehmende Öffnung (100) und einen Verbindungsteil (106 bzw. 108) aufweist, an die andere Seite des Handrasenmähers (10), wobei der zweite Pendelradsatz (84 bzw. 82) über den Verbindungsteil (106 bzw. 108) mit dem Handrasenmäher (10) und mittels der Öffnung (100) mit der hinteren Achse (110) verbunden wird.

13. Verfahren nach Anspruch 11, dadurch gekennzeichnet, daß jeder Pendelradsatz (82, 84) über die Verbindungsteile (106, 108) mit der hinteren Achse (110) verbunden ist.

14. Verfahren nach Anspruch 12, dadurch gekennzeichnet, daß jeder Pendelradsatz (82, 84) über die Verbindungsteile (106, 108) mit der vorderen Achse (32) verbunden ist.

15. Verfahren nach Anspruch 11 oder 12, dadurch gekennzeichnet, daß die beiden Pendelradsätze (82, 84) über die Haltestange (116) miteinander verbunden werden.

16. Verfahren nach Anspruch 11 oder 12, dadurch gekennzeichnet, daß zum Anschließen der Pendelradsätze (82, 84) die rückwärtigen Enden (112) der mit den Pendelradsätzen verbundenen Verbindungsteile (106, 108) auf die Achse (110 bzw. 32) mit den unverschwenkbar gelagerten Laufrädern (24 bzw. 28) aufgeschoben werden.

17. Verfahren nach Anspruch 16, dadurch gekennzeichnet, daß in die Achse (110 bzw. 32) mit den unverschwenkbar gelagerten Laufrädern (24 bzw. 28) beidenends je eine Nut (120) eingedreht wird.

## Claims

1. Hand lawn mower (10) adjustable in height, with a housing (12), on which are arranged a front axle (32) and a rear axle (110), wherein two non-pivoting running wheels (24) are fitted to the rear axle (110) and the front axle (32) is so formed that non-pivoting running wheels (28) can be fitted thereto, and with a caster wheel set (82, 84) arranged on each of the two sides of the hand lawn mower (10) and having an opening (100) receiving the front axle (32) and a connecting part (106, 108), the caster wheel set being connected to the hand lawn mower (10) through the connecting parts (106, 108).

2. Hand lawn mower (10) adjustable in height, with a housing (12), on which are arranged a front axle (32) and a rear axle (110), wherein two non-pivoting running wheels (28) are fitted to the front axle (32) and the rear axle (110) is so formed that non-pivoting running wheels (24) can be fitted thereto, and with a caster wheel set (82, 84) arranged on each of the two sides of the hand lawn mower (10) and having an opening (100) receiving the rear axle (110) and a connecting part (106, 108), the caster wheel set being connected to the hand lawn mower (10) through the connecting parts (106, 108).

3. Hand lawn mower according to claim 1, characterized in that the caster wheel sets (82, 84) are connected to the rear axle (110) by the connecting parts (106, 108).

4. Hand lawn mower according to claim 2, characterized in that the caster wheel sets (82, 84) are connected to the front axle (32) by the connecting parts (106, 108).

5. Hand lawn mower according to claim 1 or 2, characterized in that a retaining bar (116) is provided between two caster wheel sets (82, 84).

6. Hand lawn mower according to one or more of the preceding claims, characterized in that each caster wheel set (82, 84) comprises an at least partially elongated frame part (94, 96), which receives a holder (90, 92) for a caster wheel (86, 88), which holder is freely rotatable about a vertical axis.

7. Hand lawn mower according to claim 6, characterized in that each frame part (94, 96) is provided with the opening (100) receiving an axle (32, 110) and is attached at its end remote from the caster wheel (86, 88) to the connecting part (106, 108).

8. Hand lawn mower according to claims 5 and 6, characterized in that each frame part (94, 96) has an opening (102) for reception of the retaining bar (116).

9. Hand lawn mower according to one or more of the preceding claims, characterized in that each connecting part (106, 108) is provided at its end (112) remote from the frame part (94, 96) with a U-shaped slot (114) open at one end for reception of a wheel axle (110).

10. Hand lawn mower according to claim 9, characterized in that the wheel axle (110) receiving the slot (114) is provided with a groove (120).

11. Method of constructing a hand lawn mower (10) of adjustable height, with a housing (12), on which are arranged a front axle (32) and a rear axle (110), wherein two non-pivoting running wheels (24, 28) are fitted to the front (32) and rear axle (110), characterized by the following method steps:
(1) removal of the front running wheels (28),
(2) attachment to one side of the hand lawn mower (10) of a caster wheel set (82 or 84), which has an opening (100) receiving the front axle (32) and a connecting part (108 or 106), where the caster wheel set (82 or 84) is attached through the connecting part (108 or 106) to the hand lawn mower (10) and by means of the opening (100) to the front axle (32),
(3) attachment to the other side of the lawn mower (10) of a second caster wheel set (84 or 82), which has an opening (100) receiving the front axle (32) and a connecting part (106 or 108), where the second caster wheel set (84 or 82) is attached through the connecting part (106 or 108) to the hand lawn mower (10) and by means of the opening (100) to the front axle (32).

12. Method of constructing a hand lawn mower (10) of adjustable height, with a housing (12), on which are arranged a front axle (32) and a rear axle (110), wherein two non-pivoting running wheels (24, 28) are fitted to the front (32) and rear axle (110), characterized by the following method steps:
(1) removal of the rear running wheels (24),
(2) attachment to one side of the lawn mower (10) of a caster wheel set (82 or 84), which has an opening (100) receiving the rear axle (110) and a connecting part (108 or 106), where the caster wheel set (82 or 84) is attached through the connecting part (108 or 106) to the hand lawn mower (10) and by means of the opening (100) to the rear axle (110),
(3) attachment to the other side of the lawn mower (10) of a second caster wheel set (84 or 82), which has an opening (100) receiving the rear axle (110) and a connecting part (106 or 108), where the second caster wheel set (84 or 82) is attached through the connecting part (106 or 108) to the hand lawn mower (10) and by means of the opening (100) to the front axle (32).

13. Method according to claim 11, characterized in that each caster wheel set (82, 84) is connected to the rear axle (110) by the connecting part (106, 108).

14. Method according to claim 12, characterized in that each caster wheel set (82, 84) is connected to the front axle (32) by the connecting part (106, 108).

15. Method according to claim 11 or 12, characterized in that the two caster wheel sets (82, 84) are connected together by the retaining bar (116).

16. Method according to claim 11 or 12, characterized in that, for attachment of the caster wheel sets (82, 84) the rearward ends (112) of the connecting parts (106, 108) attached to the caster wheel sets are pushed over the axle (110 or 32) with the non-pivotally mounted running wheels (24 or 28).

17. Method according to claim 16, characterized in that a groove (120) is turned in each of the two ends of the axle (110 or 32) with the non-pivotally mounted running wheels (24 or 28).

**Revendications**

1. Tondeuse à gazon (10) à actionnement manuel, réglable en hauteur, comportant un carter (12), sur lequel sont montés un essieu avant (32) et un essieu arrière (110), et dans laquelle deux roues non orientables (24) sont montées sur l'essieu arrière (110), et l'essieu avant (32) est agencé de manière qu'on puisse y monter des roues non orientables (28) et comportant des ensembles respectifs (82,84) à roues oscillantes, qui sont disposés des deux côtés de la tondeuse à gazon (10) à actionnement manuel, possèdent une ouverture (100) recevant l'essieu avant (32) et un élément de liaison (106,108) et sont raccordés par l'intermédiaire des éléments (106,108) à la tondeuse à gazon (10) à actionnement manuel.

2. Tondeuse à gazon (10) à actionnement manuel et réglable en hauteur, comportant un carter (12), sur lequel sont montés un essieu avant (32) et un essieu arrière (110), et dans laquelle deux roues non orientables (28) sont montées sur l'essieu avant (32) et l'essieu arrière (110) est agencé de manière qu'on puisse y monter des roues non orientables (24), et comportant des ensembles respectifs (82,84) de roues oscillantes, qui sont disposés des deux côtés de la tondeuse à gazon (10) à actionnement manuel, possèdent une ouverture (100) recevant l'essieu arrière (110) et un élément de liaison (106,108) et sont raccordés par l'intermédiaire des éléments (106,108) à la tondeuse à gazon (10) à actionnement manuel.

3. Tondeuse à gazon à actionnement manuel selon la revendication 1, caractérisée en ce que les ensembles (82,84) de roues oscillantes sont raccordés par l'intermédiaire des éléments de liaison (106,108) à l'essieu arrière (110).

4. Tondeuse à gazon à actionnement manuel selon la revendication 2, caractérisée en ce que les ensembles (82,84) de roues oscillantes sont reliés à l'essieu avant (32) par l'intermédiaire des éléments de liaison (106,108).

5. Tondeuse à gazon à actionnement manuel selon la revendication 1 ou 2, caractérisée en ce qu'une barre de maintien (116) est prévue entre deux ensembles (82,84) de roues oscillantes.

6. Tondeuse à gazon à actionnement manuel selon une ou plusieurs des revendications précédentes, caractérisée en ce que chaque ensemble (82,84) de roues oscillantes possède un élément de cadre (94,96) au moins partiellement allongé, qui porte un dispositif de support (90,92), qui peut tourner librement autour d'un axe vertical et est prévu pour une roue oscillante (86,88).

7. Tondeuse à gazon à actionnement manuel selon la revendication 6, caractérisée en ce que chaque élément de cadre (94,96) comporte l'ouverture (100) qui reçoit un essieu (32,110), et est raccordé, au niveau de son extrémité tournée à l'opposé de la roue oscillante (86,88), à l'élément de liaison (106,108).

8. Tondeuse à gazon à actionnement manuel selon les revendications 5 et 6, caractérisée en ce que chaque élément de cadre (94,96) possède une ouverture (102) servant à loger la barre de maintien (116).

9. Tondeuse à gazon à actionnement manuel selon une ou plusieurs des revendications précédentes, caractérisée en ce que chaque élément de liaison (106,108) comporte, au niveau de son extrémité (112) tournée à l'opposé de l'élément de cadre (94,96), une fente en forme de U (114) ouverte d'un côté et servant à loger un essieu (110).

10. Tondeuse à gazon à actionnement manuel selon la revendication 9, caractérisée en ce que l'essieu (110) logé dans la fente (114) comporte une gorge (115).

11. Procédé pour transformer une tondeuse à gazon (10) à actionnement manuel et réglable en hauteur, comportant un boîtier (12), dans lequel sont montés un essieu avant (32) et un essieu arrière (110), deux roues non orientables (24,28) étant montées sur l'essieu avant (32) et sur l'essieu arrière (110), caractérisé par les étapes opératoires suivantes :
   (1) retrait des roues avant (28),
   (2) raccordement d'un ensemble de roues oscillantes (82 ou 84), qui possèdent une ouverture (100) recevant l'essieu avant (32), et un élément de liaison (108 ou 106), sur un côté de la tondeuse à gazon (10) à actionnement manuel, l'ensemble de roues oscillantes (82 ou 84) étant raccordé par l'intermédiaire de l'élément de liaison (108 ou 106) à la tondeuse à gazon (10) à actionnement manuel et, au moyen de l'ouverture (100), à l'essieu avant (32),
   (3) raccordement d'un second ensemble de roues oscillantes (84 ou 82), qui possèdent une ouverture (100) logeant l'essieu avant (32), et un élément de liaison (106 ou 108), sur l'autre côté de la tondeuse à gazon (10) à actionnement manuel, le second ensemble de roues oscillantes (84 ou 82) étant raccordé par l'intermédiaire de l'élément de liaison (106 ou 108) à la tondeuse à gazon (10) et, par l'intermédiaire de l'ouverture (100), à l'essieu avant (32).

12. Procédé pour transformer une tondeuse à gazon (10) à actionnement manuel et réglable en hauteur, comportant un boitier (12), dans lequel sont montés un essieu avant (32) et un essieu arrière (110), deux roues non orientables (24,28) étant montées sur l'essieu avant (32) et sur l'essieu arrière (110), caractérisé par les étapes opératoires suivantes :

(1) retrait des roues arrière (24),

(2) raccordement d'un ensemble de roues oscillantes (82 ou 84), qui possèdent une ouverture (100) recevant l'essieu arrière (110), et un élément de liaison (108 ou 106), sur un côté de la tondeuse à gazon (10) à actionnement manuel, l'ensemble de roues oscillantes (82 ou 84) étant raccordé par l'intermédiaire de l'élément de liaison (108 ou 106) à la tondeuse à gazon (10) à actionnement manuel et, au moyen de l'ouverture (100), à l'essieu arrière (110),

(3) raccordement d'un second ensemble de roues oscillantes (84 ou 82), qui possèdent une ouverture (100) logeant l'essieu arrière (110), et un élément de liaison (106 ou 108), sur l'autre côté de la tondeuse à gazon (10) à actionnement manuel, le second ensemble de roues oscillantes (84 ou 82) étant raccordé par l'intermédiaire de l'élément de liaison (106 ou 108) à la tondeuse à gazon (10) et, par l'intermédiaire de l'ouverture (100), à l'essieu arrière (110).

13. Procédé selon la revendication 11, caractérisé en ce que chaque ensemble de roues oscillantes (82,84) est raccordé à l'essieu arrière (110) par l'intermédiaire des éléments de liaison (106,108).

14. Procédé selon la revendication 12, caractérisé en ce que chaque ensemble de roues oscillantes (82,84) est raccordé à l'essieu avant (32) par l'intermédiaire des éléments de liaison (106,108).

15. Procédé selon la revendication 11 ou 12, caractérisé en ce que les deux ensembles de roues oscillantes (82,84) sont reliés entre eux par l'intermédiaire de la barre de maintien (116).

16. Procédé selon la revendication 11 ou 12, caractérisé en ce que pour le raccordement des ensembles de roues oscillantes (82,84), on emmanche les extrémités arrière (112) des éléments de liaison (106,108) raccordés aux ensembles de roues oscillantes, sur l'essieu (110 ou 32) équipé des roues (24 ou 28) montées de manière à être non orientables.

17. Procédé selon la revendication 16, caractérisé en ce qu'on forme par usinage au tour des gorges respectives (120) aux deux extrémités de l'essieu (110 ou 32) équipé des roues (24 ou 28) montées d'une manière non orientable.

EP 0 304 903 B1

Fig. 1

Fig. 2

10

Fig. 3

Fig. 5

Fig. 4